(19) Europäisches Patentamt
European Patent Office
Office européen des brevets

(11) Publication number: **0 403 797 B1**

(12) **EUROPEAN PATENT SPECIFICATION**

(45) Date of publication of patent specification: **22.11.95**

(51) Int. Cl.[6]: **C08K 5/16**, C08K 5/32, C09B 23/00, B41M 5/26, G11B 7/24

(21) Application number: **90109275.9**

(22) Date of filing: **16.05.90**

(54) **The use of a light stabilizer comprising an aryl nitrogen compound for stabilizing an organic dye.**

(30) Priority: **16.05.89 JP 120537/89**
**16.05.89 JP 120538/89**
**16.05.89 JP 120539/89**
**16.05.89 JP 120540/89**
**07.02.90 JP 27389/90**

(43) Date of publication of application:
**27.12.90 Bulletin 90/52**

(45) Publication of the grant of the patent:
**22.11.95 Bulletin 95/47**

(84) Designated Contracting States:
**DE GB**

(56) References cited:
**WO-A-85/01508**
**US-A- 2 619 479**
**US-A- 3 095 394**
**US-A- 3 166 529**

**CHEMICAL ABSTRACTS, vol. 109, no. 18, 31st October 1988, page 766, abstract no. 160675w, Columbus, Ohio, US; & JP-A-62 193 891**

(73) Proprietor: **TAIYO YUDEN CO., LTD.**
**16-20, Ueno 6-chome**
**Taito-ku**
**Tokyo 110 (JP)**

(72) Inventor: **Ootaguro, Kunihiko**
**16-20 Ueno 6-chome**
**Taito-ku,**
**Tokyo (JP)**
Inventor: **Hamada, Emiko**
**16-20 Ueno 6-chome**
**Taito-ku,**
**Tokyo (JP)**
Inventor: **Takagisi, Yosikazu**
**16-20 Ueno 6-chome**
**Taito-ku,**
**Tokyo (JP)**
Inventor: **Fujii, Toru**
**16-20 Ueno 6-chome**
**Taito-ku,**
**Tokyo (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

**CHEMICAL ABSTRACTS, vol. 111, no. 20, 13th November 1989, page 690, abstract no. 184302q, Columbus, Ohio, US; & JP- A-01 99 885**

**DATABASE CHEMICAL ABSTRACTS (HOST:STN), vol. 109, no. 14, 1988, abstract no. 119882y, Columbus, Ohio, US; & JP-A-63 098 493**

**Aldrich Catalogue 1988, Aldrich Chemie GmbH Co. KG, p. 1128-1129**

(74) Representative: **Strehl Schübel-Hopf Groening & Partner**
**Maximilianstrasse 54**
**D-80538 München (DE)**

## Description

The present invention relates to the use of a light stabilizer, particularly to the use of a light stabilizer comprising an aryl nitrogen compound for improving the light fastness of light vulnerable organic dyes. More specifically, the present invention relates to the use of a light stabilizer for stabilizing cyanine dyes.

The term "light-vulnerable organic dyes" as used herein refers collectively to organic dyes that deteriorate, degrade, change, fade in color, change in color or experience other changes upon exposure to light. Among other dyes, cyanine dyes are particularly important materials to be treated by the light stabilizer of the present invention.

Organic dyes have been extensively used in coloring fibers and plastics and in such applications as analytical indicators and photographic light-sensitive materials. Recently, an unconventional use of organic dyes as "functional dyes" has been found exemplified by use in dye lasers, conversion of optical energy and optical recording. Whichever application organic dyes are to be put to use, they have to meet several requirements.

Optical recording media that use a thin layer of organic dyes as a recording layer are also well known. If such optical recording media are left to stand for a prolonged period under exposure to light in various forms, the organic dyes deteriorate by light and their recording characteristics are impaired. It is therefore very important that optical recording media using organic dyes be protected against deterioration by light. A common practice of protecting such optical recording media against deterioration by light is to incorporate various light stabilizers. However, conventionally used light stabilizers do not have high degrees of light fastness and miscibility with dyes, so the stable quality of the recording layer and its recording and reproduction characteristics have been far from being completely satisfactory.

Recording media are conventionally formed in thin films by evaporation, coating and other techniques. The formation of thin films by coating is industrially advantageous over other methods since it is capable of producing large films in high volumes. In order for the coating method to be adopted, all components of a recording medium must be soluble in solvents. Among the conventionally used components of recording media, many organic dyes are fairly highly soluble in common organic solvents but, on the other hand, most light stabilizers are poorly soluble in organic solvents and hence it has been difficult to form thin films of recording media by the coating method using light stabilizers.

While several characteristics are indispensable to dyes, most important are good dyeability, high washing fastness, adequately high color densities and high color fastness to sunlight. Because of color sharpness and high color density (i.e., high molar extinction coefficient), cyanine dyes have drawn much attention of researchers, but their use has been limited on account of poor color fastness to sunlight (Horiguchi, "Synthetic Dyes", p. 311, Sankyo Shuppan).

Various methods have been proposed to improve the color fastness of dyes to sunlight. One method is to add a metal complex that absorbs light in the longer wavelength range (JP-A-59-215892, 62-193891, 62-207688, 63-199248 and 63-19293). Another method is to add a material that retards fading in color by oxygen (JP-A-59-55705). Still another method is to introduce a ring into the methine chain (JP-A-62-187088, 62-196180, 62-207684 and 63-33477). However, none of these proposals succeeded in solving the problems in a satisfactory way. Further, the addition of metal complexes and the improvement of the dye structure suffer from the disadvantage that the dye often becomes less soluble in various solvents.

CA 109(18):160675w relates to an optical recording medium which comprises a layer of polymethine dye admixed with a phenylene diamine derivative as a light stabilizer.

CA 109(14):119882y relates to an optical recording medium which is composed of a substrate bearing a recording layer containing a cyanine dye and 2,2-diphenyl-1-picrylhydrazyl as light stabilizer. The medium is reported to have high light-fastness in long term preservation due to the effect of the radical compound incorporated.

WO-A-8501508 describes the usefulness of C-nitroso-, N-nitroso- and nitrone-containing compounds for stabilizing thermoplastic polymers. C-nitroso compounds are suggested to yield the best results in stabilizing said polymers.

US-A-2,619,479 describes the use of organic nitrogen compounds, which are stable at 20°C, unreactive with oxygen at 20°C and have a magnetic susceptibility at 20°C of between $500 \times 10^{-6}$ and $3400 \times 10^{-6}$ E.M.U. for stabilizing an organic polymeric material. Among the preferred compounds are nitroxides, hydrazyls and phenazyls.

The conventional methods of light stabilization which chiefly rely upon the use of additives or the improvement of dye structures impair the solubility of dyes in solvents, particularly in polar solvents, so in most cases they have been unsatisfactory for the purpose of solving the problems of the prior art in terms of the method of using dyes and the amount in which they are used. Hence an object of the present

invention is to provide the use of a light stabilizer that is not only capable of effectively rendering dyes light fast but also suitable for use as an additive that has high solubility in solvents and sufficiently good miscibility with organic dyes to insure that their solubility will not be impaired. Further when using said light stabilizer various reactions that cause deterioration by light in organic dyes, in particular cyanine dyes should be prevented. In addition by using said light stabilizer the stable maintenance of quality and recording and reproduction characteristics of optical recording media that use organic dyes in form of thin films should be improved.

Organic dyes fade or change in color upon exposure to light and the mechanism of these phenomena largely remains unclear because they involve the interaction between the structure of specific dyes and various environmental factors (e.g. substrate, the atmosphere, pollutants contained, humidity and temperature). General references on the mechanism of fading of dyes by light include a review by Charles H. Giles and Robert B. Mckay, "The Light fastness of Dyes, A Review" in Textile Research Journal, Vol. 33, p. 527 (1963); Kitao, "Chemistry of Functional Dyes", p. 65, CMC; and Akamatsu, Hirashima et al., "Applications of Photochemistry", p. 169, Kyoritsu Shuppan, but these references do not show explicitly the mechanism for the fading of cyanine dyes by light or the conditions for making them light fast.

Under these circumstances, the present inventors conducted intensive studies based on the hypothesis that cyanine dyes would fade in color by exposure to light through photo-degradation (radical decomposition), not through autoxidation. The present inventors screened various radical decomposition inhibitors and compounds that were expected to have comparable functions with a view to finding inhibitors or compounds that were effective in rendering cyanine dyes light fast. As a result, a group of compounds that were very effective for this purpose was discovered.

In detail, the present invention provides the use of a nitrosodiphenyl amine represented by the general formula:

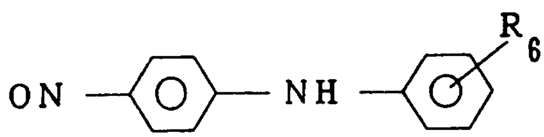
........ (I)

where $R_6$ is selected from the group consisting of hydrogen, a lower alkyl group, a carboxyl group, a cyano group, a hydroxyethyl group, an amino group, a hydroxyl group, an alkoxyl group, a trifluoroalkyl group, a sulfonic acid amide group and carboxylic acid amide group for stabilizing an organic dye.

Several specific examples of nitrosodiphenylamine and its derivatives having the structure represented by the general formula (I) which can be used with particular advantage in the practice of the present inventions are listed below.

(1) 4-Nitrosodiphenylamine
(2) 4-Nitroso-2'-methyldiphenylamine
(3) 4-Nitroso-3'-methyldiphenylamine
(4) 4-Nitroso-4'-methyldiphenylamine
(5) 4-Nitroso-4'-methoxydiphenylamine
(6) 4-Nitroso-4'-ethoxydiphenylamine
(7) 4-Nitroso-4'-aminodiphenylamine
(8) 4-Nitroso-4'-dimethylaminodiphenylamine
(9) 4-(p-nitrosophenylamino)-benzoic acid
(10) 4-Nitroso-4'-cyanodiphenylamine

Some nitrosodiphenylamine derivatives represented by the general formula:

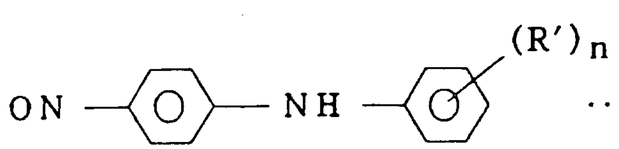
........ (II)

where n is an integer of 1 - 3, preferably 1 - 2, and R' is the same or different member selected from the group consisting of a trifluoroalkyl group (whose alkyl has 1 - 2, preferably one carbon atom), a halogen atom (such as F, Cl, Br and I, most preferably I) and a nitro group were found to be particularly useful for the intended purpose of the present invention.

Several specific examples of the nitrosodiphenylamine derivatives represented by the general formula (II) are listed below under the reference number (11) - (33).

These nitrosodiphenylamine derivatives can be produced advantageously by reacting an aniline derivative represented by the following general formula (III) with p-nitrosophenol in a lower alcohol such as methanol and ethanol in the presence of a catalyst such as diphosphorus pentoxide, the formula of said aniline derivative being:

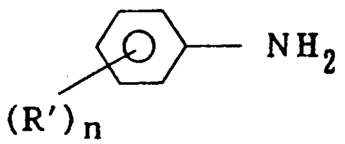 ······ (III)

where R' is one or two or more substituents selected from the group consisting a halogen atom, a nitro group and a trifluoroalkyl group, and n is an integer of from 1 to 3.

(11) 4-Nitroso-4'-nitrodiphenylamine
(12) 4-Fluoro-4'-nitrosodiphenylamine
(13) 2-Chloro-4'-nitrosodiphenylamine
(14) 3-Chloro-4'-nitrosodiphenylamine
(15) 2-Bromo-4'-nitrosodiphenylamine
(16) 4-Bromo-4'-nitrosodiphenylamine
(17) 4-Iodo-4'-nitrosodiphenylamine
(18) 2-Trifluoromethyl-4'-nitrosodiphenylamine
(19) 3-Trifluoromethyl-4'-nitrosodiphenylamine
(20) 4-Trifluoromethyl-4'-nitrosodiphenylamine
(21) 4-Ethyl-4'-nitrosodiphenylamine
(22) 4-Isopropyl-4'-nitrosodiphenylamine
(23) 4-n-Butyl-4'-nitrosodiphenylamine
(24) 2, 4-Dichloro-4'-nitrosodiphenylamine
(25) 3, 4-Dichloro-4'-nitrosodiphenylamine
(26) 2, 4-Dibromo-4'-nitrosodiphenylamine
(27) 3, 5-Ditrifluoromethyl-4'-nitrosodiphenylamine
(28) 3-Chloro-4-methyl-4'-nitrosodiphenylamine
(29) 2-Methyl-5-nitro-4'-nitrosodiphenylamine
(30) 2-Chloro-4-nitro-4'-nitrosodiphenylamine
(31) 2-Chloro-5-nitro-4'-nitrosodiphenylamine
(32) 3-Nitro-4-Chloro-4'-nitrosodiphenylamine
(33) 2, 4, 5-Trichloro-4'-nitrosodiphenylamine

Any type of the above-mentioned light stabilizers comprised of an aryl nitrogen compound are used with particular organic dyes to render them light fast, and they may be used either on their own or as admixtures with one another.

The light stabilizers are generally used in amounts ranging from 0.01 to 1 mole per mole of light-vulnerable organic dye such as cyanine dyes but the amount of light stabilizers to be used in practice may be adjusted in accordance with the specific need. Preferably, the light stabilizers are used in amounts ranging from 0.1 to 1 mole per mole of cyanine dyes. The light stabilizers may be used in greater amounts but, as a consequence, the resulting color density will decrease and in some cases, the intended color density might not be attained. If the amount of light stabilizers used is unduly small, it sometimes occurs that the advantages of the present invention are not attained in a definite way.

Examples of light-vulnerable organic dyes that can be rendered lightfast by the light stabilizers of the present invention include polymethine dyes, triarylmethane dyes, pyrylium dyes, phenanthrene dyes, tetradehydrocholine dyes, triarylamine dyes, squarylium dyes, croconic methine dyes, and merocyanine dyes. Cyanine dyes that are particularly suitable for use are indolenic cyanine dyes and thiazolic cyanine dyes. A more desirable cyanine dye is indodicarbocyanine.

The present invention is described hereinafter with reference to examples which are given for illustrative purposes only and should not be taken as limiting. In the examples, a glass plate or polycarbonate (PC) plate was used as a substrate to be colored but it should be noted that comparable results can be attained

with other substrates such as fibers, paper and films. In the examples, ethanol was used as a solvent to dissolve light stabilizers. Needless to say, other polar solvents can be used but ethanol was selected since it was the best solvent in consideration of toxicity, volatility and corrosive action on the substrates.

Example 1

To 100 parts by weight of stirred ethanol, 3.0 parts by weight of NK 2421 (cyanine dye produced by Japanese Institute for Photosensitizing Dyes) and 1.0 part by weight of 4-nitroso-diphenylamine [the compound listed hereinabove under (1 )] were successively added and the mixture was stirred at 20 - 30 °C for 1 h. Subsequently, the mixture was subjected to filtration under gravity through Toyo Roshi No. 2 (qualitative filter paper) and the filtrate was spin-coated uniformly onto a glass plate. The maximum absorption wavelength (λmax) of the test piece was measured to determine a reference value. Thereafter, the coated surface of the test piece was exposed to light from a lamp (DR 400T of Irie Seisakusho Co., Ltd.), positioned 20 cm above, for periods of 3, 6 and 9 h, with the time of measurement of λmax being set as zero hour. After the exposure for the respective periods, the maximum absorption wavelength (λmax) of the test piece was measured and the percent fading of the cyanine dye was calculated from the reference and measured values. The results are shown in Table 1.

Example 2

To 100 parts by weight of stirred ethanol, 3.0 parts by weight of NK 2421 and 0.1 part by weight of 4-nitrosodiphenylamine were successively added and the mixture was stirred at 20 - 30 °C for 1 h. The subsequent procedures were entirely the same as in Example 1 and the percent fading of the cyanine dye was calculated. The results are shown in Table 1.

Comparative Example 1

To 100 parts by weight of stirred ethanol, 3.0 parts by weight of NK 2421 and 1.0 part by weight of diphenylamine were successively added and the mixture was stirred at 20 - 30 °C for 1 h. The subsequent procedures were entirely the same as in Example 1 and the percent fading of the cyanine dye was calculated. The results are shown in Table 1.

Example 3

To 100 parts by weight of stirred ethanol, 3.0 parts by weight of NK 1414 (cyanine dye produced by Japanese Institute for Photosensitizing Dyes) and 0.3 parts by weight of 4-nitroso-4'-methyldiphenylamine [the compound listed hereinabove under (4)] were successively added and the mixture was stirred at 20 - 30 °C for 1 h. The subsequent procedures were entirely the same as in Example 1 except that a PC plate was used as a substrate. The results are shown in Table 1.

Example 4

To 100 parts by weight of stirred ethanol, 3.0 parts by weight of NK 1414 and 0.5 parts by weight of 4-nitroso-4'-methoxydiphenylamine [the compound listed hereinabove under (5)] were successively added and the mixture was stirred at 20 - 30 °C for 1 h. The subsequent procedures were the same as in Example 3. The results are shown in Table 1.

Example 5

To 100 parts by weight of stirred ethanol, 5.0 parts by weight of NK 1414 and 2.0 parts by weight of 4-nitroso-4'-methyldiphenylamine [the compound listed hereinabove under (4)] were successively added and the mixture was stirred at 20 - 30 °C for 1 h. The subsequent procedures were the same as in Example 3. The results are shown in Table 1.

Example 6

To 100 parts by weight of stirred ethanol, 4.0 parts by weight of NK 3219 (cyanine dye produced by Japanese Institute for Photosensitizing Dyes) and 1.0 part by weight of 4-(p-nitrosophenylamine)benzoic

acid [the compound listed hereinabove under (9)] were successively added and the mixture was stirred at 20 - 30 °C for 1 h. The subsequent procedures were entirely the same as in Example 3. The results are shown in Table 1.

Comparative Example 2

To 100 parts by weight of stirred ethanol, 3.0 parts by weight of NK 2421 and 0.5 parts by weight of PA 1006 (nickel complex produced by Mitsuitoatsu Fine Co., Ltd.) were successively added and the mixture was stirred at 20 - 30 °C for 1 h. It was observed that a substantial amount of the dye remained undissolved. The subsequent procedures were the same as in Example 3. The results are shown in Table 1.

Comparative Example 3

To 100 parts by weight of stirred ethanol, 3.0 parts by weight of NK 2421 were added and the mixture was stirred at 20 - 30 °C for 1 h. The subsequent procedures were the same as in Example 18 except that no diphenylamine derivative was used. The results are shown in Table 1.

Comparative Example 4

To 100 parts by weight of stirred ethanol, 3.0 parts by weight of NK 1414 were added and the mixture was stirred at 20 - 30 °C for 1 h. The subsequent procedures were the same as in Example 3 except that no diphenylamine derivative was used. The results are shown in Table 1.

Comparative Example 5

To 100 parts by weight of stirred ethanol, 3.0 parts by weight of NK 1414 and 1.0 part by weight of diphenylamine were added and the mixture was stirred at 20 - 30 °C for 1 h. The subsequent procedures were the same as in Example 3. The results are shown in Table 1.

Comparative Example 6

To 100 parts by weight of stirred ethanol, 3.0 parts by weight of NK 3219 were added and the mixture was stirred at 20 - 30 °C for 1 h. The subsequent procedures were the same as in Example 3 except that no diphenylamine derivative was used. The results are shown in Table 1.

Comparative Example 7

To 100 parts by weight of stirred ethanol, 3.0 parts by weight of NK 3219 and 1.0 part by weight of diphenylamine were successively added and the mixture was stirred at 20 - 30 °C for 1 h. The subsequent procedures were entirely the same as in Example 3. The results are shown in Table 1.

The results of Examples 1 - 6 and Comparative Examples 1 - 7 are summarized in Table 1 in terms of the relationship between the duration of exposure to light and the percent fading of cyanine dye.

Table 1

| | Percent Fading of Cyanine Dye | | |
|---|---|---|---|
| | 3-h exposure | 6-h exposure | 9-h exposure |
| Example 1 | 5.0 % | 6.2 % | 7.5 % |
| Example 2 | 7.1 | 8.7 | 10.0 |
| Example 3 | 6.2 | 7.1 | 8.9 |
| Example 4 | 4.8 | 5.9 | 7.2 |
| Example 5 | 2.0 | 3.1 | 4.1 |
| Example 6 | 4.2 | 5.8 | 7.2 |
| Comparative Example 1 | 24.0 | 29.7 | 38.5 |
| Comparative Example 2 | 15.8 | 28.0 | 38.2 |
| Comparative Example 3 | 25.2 | 30.1 | 39.0 |
| Comparative Example 4 | 25.0 | 30.3 | 38.3 |
| Comparative Example 5 | 24.8 | 29.8 | 38.5 |
| Comparative Example 6 | 17.8 | 24.5 | 29.0 |
| Comparative Example 7 | 17.5 | 24.0 | 29.2 |

As will be apparent from the experimental data shown in Table 1, the nitrosodiphenylamine derivatives provided outstanding results when they were used as light stabilizers. These compounds are highly soluble in organic solvents, particularly in general-purpose polar organic solvents, so they are amenable to coating processes with the attendant potential advantage of large-scale production (see Examples 1 and 2). Comparison between Example 1 (where a glass plate was used as a substrate) and Example 3 (where a PC plate was used) shows that the difference in substrate caused only very small differences in the effectiveness of light stabilizers and that nitrosodiphenylamine derivatives were effective in both cases. It is therefore expected that optical recording media of a type that uses thin films of organic dyes as recording layers and which are characterized by long keeping quality of the recording layers and good recording and reproduction characteristics can be manufactured by incorporating those derivatives as light stabilizers.

Example 7

An example of a process for producing 4-fluoro-4'-nitrosodiphenylamine [the compound listed hereinbefore under (12)] is given below.

In 150 ml of methanol, 12.3 g (1/10 mole) of p-nitrosophenol was dissolved at room temperature. Then, 2.5 g of p-toluensolfonic acid dihydrate was added to the mixture and it was agitated at 20 - 50 °C. After 1 h. of agitation 11.1 g (1/10 mole) of p-fluoroaniline was put into the mixture, which was heated to 30 - 35 °C with agitation. After 2 hs. of agitation an aqueous solution comprising 1.0 g of sodium hydrogencarbonate dissolved in 150 ml of ion-exchange purified water was added to said mixture, which was agitated. The product precipitated from the solution after 1 h. of agitation was separated from the solution through filtration by means of suction and was purified by recrystallization from ethanol.

This purified product was observed to have a melting point in the range of 183 - 185 °C. The product was obtained in an amount of 5.2 g (in a 24.1% yield).

From the value of the elemental analysis and the result of spectral analysis the molecular formula of this compound was determined to be $C_{12}H_9ON_2F$. The comparison of the calculated and the measured values is as shown in Table 2 below.

Table 2

| | Calculated Value (%) | Measured Value (%) |
|---|---|---|
| C | 66.66 | 66.51 |
| H | 4.20 | 4.21 |
| N | 12.96 | 13.00 |

Example 8

An example of a process for producing 4-bromo-4'-nitrosodiphenylamine [the compound listed hereinbefore under (16)] is given below.

Procedures given in Example 7 were repeated except that 17.2 g of p-bromoaniline was used substituting for 11.1 g of p-fluoroaniline used in Example 7, and the following purified product was obtained. This compound was found to have a melting point in the range of 159 - 161 °C and was obtained in an amount of 10.2 g (in a 37.5% yield). From the value of the elemental analysis and the result of the spectral analysis the molecular formula of this compound was determined to be $C_{12}H_9ON_2Br$. The comparison of the calculated and the measured values is as given in Table 3 below.

Table 3

| | Calculated Value (%) | Measured Value (%) |
|---|---|---|
| C | 52.01 | 52.12 |
| H | 3.28 | 3.29 |
| N | 10.11 | 10.53 |

Example 9

An example of a process for producing 4-iodo-4'-nitrosodiphenylamine [the compound listed hereinbefore under (17)] is given below.

In 200 ml of ethanol, 12.3 g (1/10 mole) of p-nitrosophenol was dissolved at room temperature. Then, 1.4 g (1/100 mole) of diphosphorus pentoxide was added thereto and the resulting mixture was agitated at 20 - 25 °C. After 1 h. of agitation 21.9 g (1/10 mole) of p-iodoaniline was put into it and the mixture was heated to 30 - 35 °C for 2 hs. with agitation. After 2 hs. of agitation the solution was cooled (to 10 - 20 °C) and the precipitated product was filtered by means of suction. The solid product was washed with water and was purified by recrystallization from ethanol. The purified product was found to have a melting point in the range of 146 - 147 °C and was obtained in an amount of 21.5 g (in a 66.4% yield).

From the value of the elemental analysis and the result of the spectral analysis the molecular formula of this product was found to be $C_{12}H_9ON_2I$. The comparison of the calculated and the measured values is as shown in Table 4 below.

Table 4

| | Calculated Value (%) | Measured Value (%) |
|---|---|---|
| C | 44.47 | 44.26 |
| H | 2.80 | 2.91 |
| N | 8.65 | 8.73 |

Example 10

Another example of a process for producing 4-iodo-4'-nitrosodiphenylamine [the compound listed hereinabove under (17)] is given below.

The procedures as in Example 9 were repeated except that 2.5 g of p-toluenesulfonic acid dihydrate was used substituting for 1.4 g of diphosphorus pentoxide in Example 9. A compound having a melting point in the range of 157 - 158 °C was obtained in an amount of 10.5 g (in a 32.4% yield). It was confirmed by the mixed examination that this compound had the melting point in the range of 157 - 158 °C and was the same material as the product obtained in Example 9.

Example 11

An example of a process for producing 4-trifluoromethyl-4'-nitrosodiphenylamine[the compound listed hereinbefore under (20)] is given below.

The procedures as in Example 9 were repeated except that 11.1 g (1/10 mole) of p-trifluoromethylaniline was used substituting for 21.9 g of p-iodoaniline used in Example 9. The product having a melting point in the range of 183 - 185 °C was obtained in an amount of 15.2 g (in a 57.1% yield).

From the value of the elemental analysis and the result of the spectral analysis the molecular formula of this product was determined to be $C_{13}H_9ON_2F_3$. The comparison of the calculated and the measured values is as shown in Table 5 below.

Table 5

| | Calculated Value (%) | Measured Value (%) |
|---|---|---|
| C | 58.65 | 58.72 |
| H | 3.41 | 3.40 |
| N | 10.53 | 10.69 |

Examples 12 - 28

A number of various novel nitrosodiphenylamine derivatives listed hereinbefore under (12) - (33) were prepared by the procedures similar to those as in Examples 7 and 10. Results of the measurements for determining the melting points and the values of the elemental analysis of these derivatives are given in Table 6

With respect to each of the nitrosodiphenylamine derivatives of the present invention the maximum absorption wavelength (λmax) and molecular absorption coefficient (ε) were measured [measuring instruments: U-3210 type self-recording spectrophotometer produced by Hitachi Manufacturing Co., Ltd.; Solvent: ethanol (special grade chemical)]. The measurements are given in Table 7.

Table 6

| Example No. | Compound No. | Nitrosodiphenylamine Derivative | Melting Point (°C) | Value of Elemental Analysis (%) Caluculated C | H | N | Measured C | H | N |
|---|---|---|---|---|---|---|---|---|---|
| 12 | 13 | 2-Chloro-4'-nitrosodiphenylamine | 128 - 129 | 61.93 | 3.91 | 12.04 | 62.01 | 3.92 | 12.01 |
| 13 | 14 | 3-Chloro-4'-nitrosodiphenylamine | 147 - 149 | 61.93 | 3.91 | 12.04 | 61.87 | 3.90 | 12.11 |
| 14 | 15 | 2-Bromo-4'-nitrosodiphenylamine | 123 - 125 | 52.01 | 3.28 | 10.11 | 52.22 | 3.31 | 10.05 |
| 15 | 18 | 2-Trifluoromethyl-4'-nitrosodiphenylamine | 105 - 106 | 58.65 | 3.41 | 10.53 | 58.55 | 3.49 | 10.50 |
| 16 | 19 | 3-Trifluoromethyl-4'-nitrosodiphenylamine | 150 - 151 | 58.65 | 3.41 | 10.53 | 58.73 | 3.52 | 10.52 |
| 17 | 21 | 4-Ethyl-4'-nitrosodiphenylamine | 111 - 115 | 76.53 | 6.25 | 12.38 | 76.52 | 6.33 | 12.40 |
| 18 | 22 | 4-Isopropyl-4'-nitrosodiphenylamine | 112 - 113 | 74.97 | 6.72 | 11.66 | 74.79 | 6.59 | 11.78 |
| 19 | 23 | 4-n-Butyl-4'-nitrosodiphenylamine | 89 - 91 | 75.53 | 7.15 | 11.01 | 75.50 | 7.22 | 11.04 |

| Example No. | Compound No. | Nitrosodiphenylamine Derivative | Melting Point (°C) | Value of Elemental Analysis (%) | | | | | |
|---|---|---|---|---|---|---|---|---|---|
| | | | | Caluculated | | | Measured | | |
| | | | | C | H | N | C | H | N |
| 20 | 24 | 2, 4-Dichloro-4'-nitrosodiphenylamine | 143 - 144 | 53.93 | 3.03 | 10.49 | 54.01 | 3.02 | 10.52 |
| 21 | 25 | 3, 4-Dichloro-4'-nitrosodiphenylamine | 188 - 189 | 53.96 | 3.03 | 10.49 | 54.13 | 3.11 | 10.46 |
| 22 | 26 | 2, 4-Dibromo-4'-nitrosodiphenylamine | 135 - 136 | 40.48 | 2.27 | 7.87 | 40.44 | 2.29 | 7.85 |
| 23 | 27 | 3, 5-Ditrifluoromethyl-4'-nitrosodiphenylamine | 158 - 159 | 50.31 | 2.42 | 8.38 | 50.32 | 2.40 | 8.40 |
| 24 | 28 | 3-Chloro-4-methyl-4'-nitrosodiphenylamine | 164 - 165 | 63.29 | 4.50 | 11.36 | 63.17 | 4.62 | 11.33 |
| 25 | 29 | 2-Methyl-5-nitro-4'-nitrosodiphenylamine | 163 - 164 | 60.68 | 4.32 | 10.89 | 60.70 | 4.30 | 10.71 |
| 26 | 30 | 2-Chloro-4-nitro-4'-nitrosodiphenylamine | 175 - 176 | 51.90 | 2.91 | 15.14 | 51.77 | 2.89 | 15.15 |
| 27 | 32 | 3-Nitro-4-chloro-4'-nitrosodiphenylamine | 197 | 51.90 | 2.91 | 15.14 | 51.83 | 2.79 | 15.09 |
| 28 | 33 | 2, 4, 5-Trichloro-4'-nitrosodiphenylamine | 161 - 162 | 47.79 | 2.34 | 9.29 | 47.82 | 2.35 | 9.30 |

Table 7

| Compound No. | Nitrosodiphenylamine Derivative | λmax (nm) | $\varepsilon(\times 10^4)$ |
|---|---|---|---|
| 12 | 4-Fluoro-4'-nitrosodiphenylamine | 417 | 2.80 |
| 13 | 2-Chloro-4'-nitrosodiphenylamine | 408 | 2.69 |
| 14 | 3-Chloro-4'-nitrosodiphenylamine | 415 | 2.58 |
| 15 | 2-Bromo-4'-nitrosodiphenylamine | 407 | 2.74 |
| 16 | 4-Bromo-4'-nitrosodiphenylamine | 420 | 3.03 |
| 17 | 4-Iodo-4'-nitrosodiphenylamine | 422 | 3.15 |
| 18 | 2-Trifluoromethyl-4'-nitrosodiphenylamine | 402 | 2.45 |
| 19 | 3-Trifluoromethyl-4'-nitrosodiphenylamine | 413 | 2.95 |
| 20 | 4-Trifluoromethyl-4'-nitrosodiphenylamine | 413 | 3.07 |
| 21 | 4-Ethyl-4'-nitrosodiphenylamine | 426 | 2.57 |
| 22 | 4-Isopropyl-4'-nitrosodiphenylamine | 427 | 2.90 |
| 23 | 4-n-Butyl-4'-nitrosodiphenylamine | 427 | 2.95 |
| 24 | 2, 4-Dichloro-4'-nitrosodiphenylamine | 405 | 2.76 |
| 25 | 3, 4-Dichloro-4'-nitrosodiphenylamine | 413 | 3.03 |
| 26 | 2, 4-Dibromo-4'-nitrosodiphenylamine | 404 | 2.80 |
| 27 | 3, 5-Ditrifluoromethyl-4'-nitrosodiphenylamine | 400 | 3.00 |

| Compound No. | Nitrosodiphenylamine Derivative | λmax (nm) | ε(x10[4]) |
|---|---|---|---|
| 28 | 3-Chloro-4-methyl-4'-nitrosodiphenylamine | 420 | 2.96 |
| 29 | 2-Methyl-5-nitro-4'-nitrosodiphenylamine | 402 | 2.77 |
| 31 | 2-Chloro-5-nitro-4'-nitrosodiphenylamine | 396 | 1.98 |
| 32 | 3-Nitro-4-chloro-4'-nitrosodiphenylamine | 409 | 3.02 |
| 33 | 2, 4, 5-Trichloro-4'-nitrosodiphenylamine | 400 | 2.45 |

Now, reference will be made to the use of the light stabilizers in organic dyes to which the 4'-nitrosodiphenylamine derivatives have been added to be admixed uniformly with each other or on which said derivatives have been coated. In these cases the light stabilizers are used in an amount in the range of 0.001 - 50 parts (by weight) per 100 parts of the specific dye to which the light stabilizer is to be added. Preferably the light stabilizer should be added in an amount of 0.01 - 30 parts based on the same standard as mentioned above. In the specification the advantage of the invention is explained mainly by reference to the effectiveness of the light stabilizer of the present invention when it is incorporated in the cyanine dyes used as an important component of the optical recording medium. The term "part(s)" appearing in the following examples is used to mean "part(s) by weight".

Example 28

To 100 parts by weight of stirred ethanol, 3.0 parts by weight of NK 2421 (cyanine dye produced by Japanese Institute for Photosensitizing Dyes) and 1.0 part by weight of 4-fluoro4'-nitrosodiphenylamine [the compound listed hereinabove under (12)] were successively added and the mixture was stirred at 20 - 30 °C for 1 h. Subsequently, the mixture was subjected to filtration under gravity through Toyo Roshi No. 2 (qualitative filter paper) and the filtrate was spin-coated uniformly onto a glass plate.

Light resistance test was conducted by using Atlas Fade-Ometer CI35F1 (Xenon arc 6500W) produced by Toyo Seikiseisakusho Co., Ltd.

A reference value was determined in accordance with JIS L0841 by simultaneously irradiating Blue Scale A based on the First Exposure Method (Day-and-Night Method).

As a result of the sunlight test (First Exposure Method) or the Day-and-Night Method, the light resistance of the test piece was determined to be the second grade.

Comparative Example 8

All the procedures as in Example 28 were repeated except that the addition of 4-fluoro-4'-nitrosodiphenylamine was omitted.

As a result of the sunlight test (First Exposure Method) or the Day-and-Night Method, the light resistance of the test piece was determined to be less than the first grade.

Example 29

To 100 parts by weight of stirred ethanol, 3.0 parts by weight of NK 3219 (cyanine dye produced by Japanese Institute for Photosensitizing Dyes) and 0.5 parts by weight of 4-iodo-4'-nitrosodiphenylamine [the compound listed hereinbefore under (17)] were successively added and the mixture was stirred at 20 - 30 °C for 1 h. Subsequently, the mixture was subjected to filtration under gravity through Toyo Roshi No. 2 (qualitative filter paper) and the filtrate was spin-coated onto a polycarbonate plate. The test piece thus

obtained was subjected to the test for determining light resistance according to the procedures as in Example 7.

As a result of the sunlight test (First Exposure Method) or the Day-and-Night Method, the light resistance of the test piece was determined to be in the range of the second to the third grade.

Comparative Example 9

An experiment was conducted according to the same procedures as in Example 28 except 0.5 parts of diphenylamine were used substituting for 0.5 parts of 4-iodo-4'-nitrosodiphenylamine.

As a result of the sunlight test (First Exposure Method) or the Day-and-Night Method, the light resistance of the test piece was determined to be less than the first grade.

Example 30

An experiment was conducted according to the same procedures as in Example 28 except that 1.5 parts of 4-trifluoromethyl-4'-nitrosodiphenylamine was used substituting for 0.5 parts of 4-iodo-4'-nitrosodiphenylamine used in Example 28.

As a result of the sunlight test (First Exposure Method) or the Day-and-Night Method, the light resistance of the test piece was determined to be the third grade.

As will be apparent from the experimental data shown in Examples, the nitrosodiphenylamine derivatives of the present invention provided outstanding results when they were used as light stabilizers. These compounds are highly soluble in organic solvents, particularly in general-purpose polar organic solvents, so they are amenable to coating processes with the attendant potential advantage of large-scale production. Comparison between Example 28 (where a glass plate was used as a substrate) and Example 29 (where a plastics plate was used) shows that the difference in substrate caused only very small differences in the effectiveness of light stabilizers of the present invention, and that nitrosodiphenylamine derivatives were effective in both cases. It is therefore expected that optical recording media of a type that uses thin films of organic dyes as recording layers and which are characterized by long keeping quality of the recording layers and good recording and reproduction characteristics can be manufactured by incorporating those derivatives as light stabilizers.

**Claims**

**1.** The use of a nitrosodiphenyl amine represented by the general formula

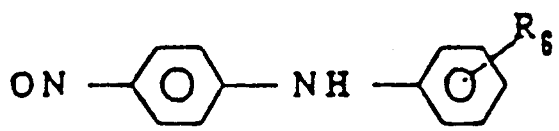 ········ (I)

wherein $R_6$ is selected from the group consisting of hydrogen, a lower alkyl group, a carboxyl group, a cyano group, a hydroxyethyl group, an amino group, a hydroxyl group, an alkoxyl group, a sulfonic acid amide group, a carboxylic acid amide group;
or the general formula:

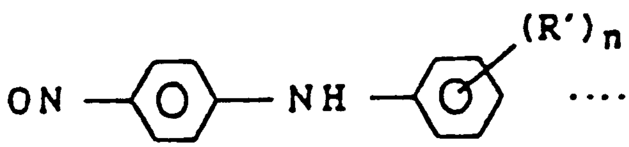 ········ (II)

wherein n is an integer of 1 - 3, and R' is the same or different member selected from the group consisting of a trifluoroalkyl group, a halogen atom and a nitro group, for stabilizing an organic dye, against the action of light.

2. The use according to claim 1 wherein the nitrosodiphenyl amine is a compound selected from the group consisting of:
4-Nitrosodiphenylamine
4-Nitroso-2'-methyldiphenylamine
4-Nitroso-3'-methyldiphenylamine
4-Nitroso-4'-methyldiphenylamine
4-Nitroso-4'-methoxydiphenylamine
4-Nitroso-4'-ethoxydiphenylamine
4-Nitroso-4'-aminodiphenylamine
4-Nitroso-4'-dimethylaminodiphenylamine
4-(p-nitrosophenylamino)-benzoic acid
4-Nitroso-4'-nitrodiphenylamine
4-Nitroso-4'-cyanodiphenylamine
4-Fluoro-4'-nitrosodiphenylamine
2-Chloro-4'-nitrosodiphenylamine
3-Chloro-4'-nitrosodiphenylamine
2-Bromo-4'-nitrosodiphenylamine
4-Bromo-4'-nitrosodiphenylamine
4-Iodo-4'-nitrosodiphenylamine
2-Trifluoromethyl-4'-nitrosodiphenylamine
3-Trifluoromethyl-4'-nitrosodiphenylamine
4-Trifluoromethyl-4'-nitrosodiphenylamine
4-Ethyl-4'-nitrosodiphenylamine
4-Isopropyl-4'-nitrosodiphenylamine
4-n-Butyl-4'-nitrosodiphenylamine
2, 4-Dichloro-4'-nitrosodiphenylamine
3, 4-Dichloro-4'-nitrosodiphenylamine
2, 4-Dibromo-4'-nitrosodiphenylamine
3, 5-Bis(trifluoromethyl)-4'-nitrosodiphenylamine
3-Chloro-4-methyl-4'-nitrosodiphenylamine
2-Methyl-5-nitro-4'-nitrosodiphenylamine
2-Chloro-4-nitro-4'-nitrosodiphenylamine
2-Chloro-5-nitro-4'-nitrosodiphenylamine
3-Nitro-4-Chloro-4'-nitrosodiphenylamine
2, 4, 5-Trichloro-4'-nitrosodiphenylamine

3. The use according to claim 1 or 2 wherein the organic dye is a cyanine dye.

4. The use according to any of the claims 1 to 3, wherein the dye is a component of an optical recording medium.

**Patentansprüche**

1. Verwendung eines Nitrosodiphenylamins, das durch die allgemeine Formel

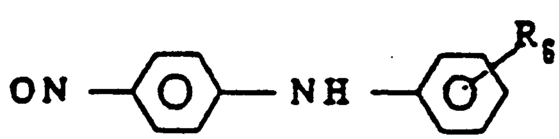

(I) ,

worin $R_6$ ausgewählt ist aus der Gruppe bestehend aus Wasserstoff, einer niederen Alkylgruppe, einer Carboxylgruppe, einer Cyangruppe, einer Hydroxyethylgruppe, einer Aminogruppe, einer Hydroxylgruppe, einer Alkoxygruppe, einer Sulfonsäureamidgruppe, einer Carbonsäureamidgruppe
oder durch die allgemeine Formel

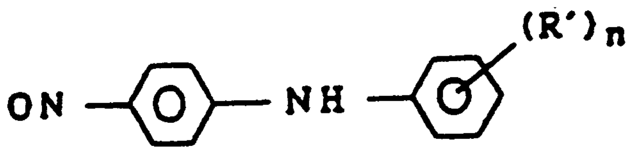

(II) ,

worin n eine ganze Zahl von 1 bis 3 ist, und R' gleich oder verschieden ist und aus der Gruppe bestehend aus einer Trifluoralkylgruppe, einem Halogenatom und einer Nitrogruppe ausgewählt ist, dargestellt ist,
zur Stabilisierung eines organischen Farbstoffs gegen den Einfluß von Licht.

**2.** Verwendung gemäß Anspruch 1, wobei das Nitrosodiphenylamin eine Verbindung ist, die aus der Gruppe bestehend aus
4-Nitrosodiphenylamin
4-Nitroso-2'-methyldiphenylamin
4-Nitroso-3'-methyldiphenylamin
4-Nitroso-4'-methyldiphenylamin
4-Nitroso-4'-methoxydiphenylamin
4-Nitroso-4'-ethoxydiphenylamin
4-Nitroso-4'-aminodiphenylamin
4-Nitroso-4'-dimethylaminodiphenylamin
4-(p-Nitrosophenylamino)-benzoesäure
4-Nitroso-4'-nitrodiphenylamin
4-Nitroso-4'-cyanodiphenylamin
4-Fluor-4'-nitrosodiphenylamin
2-Chlor-4'-nitrosodiphenylamin
3-Chlor-4'-nitrosodiphenylamin
2-Brom-4'-nitrosodiphenylamin
4-Brom-4'-nitrosodiphenylamin
4-Iod-4'-nitrosodiphenylamin
2-Trifluormethyl-4'-nitrosodiphenylamin
3-Trifluormethyl-4'-nitrosodiphenylamin
4-Trifluormethyl-4'-nitrosodiphenylamin
4-Ethyl-4'-nitrosodiphenylamin
4-Isopropyl-4'-nitrosodiphenylamin
4-n-Butyl-4'-nitrosodiphenylamin
2,4-Dichlor-4'-nitrosodiphenylamin
3,4-Dichlor-4'-nitrosodiphenylamin
2,4-Dibrom-4'-nitrosodiphenylamin
3,5-Bis-(trifluormethyl)-4'-nitrosodiphenylamin
3-Chlor-4-methyl-4'-nitrosodiphenylamin
2-Methyl-5-nitro-4'-nitrosodiphenylamin
2-Chlor-4-nitro-4'-nitrosodiphenylamin
2-Chlor-5-nitro-4'-nitrosodiphenylamin
3-Nitro-4-chlor-4'-nitrosodiphenylamin
2,4,5-Trichlor-4'-nitrosodiphenylamin
ausgewählt ist.

**3.** Verwendung gemäß Anspruch 1 oder 2, wobei der organische Farbstoff ein Cyanin-Farbstoff ist.

**4.** Verwendung gemäß einem der Ansprüche 1 bis 3, wobei der Farbstoff eine Komponente eines optischen Aufzeichungsmediums ist.

## Revendications

1. Utilisation d'une nitrosodiphénylamine représentée par la formule générale :

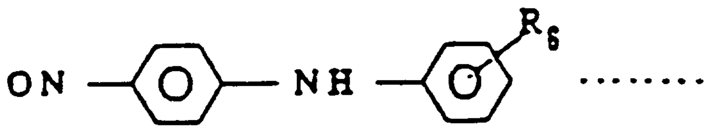

(I)

dans laquelle $R_6$ est choisi dans le groupe constitué par un atome d'hydrogène, un groupe alkyle inférieur, un groupe carboxy, un groupe cyano, un groupe hydroxyéthyle, un groupe amino, un groupe hydroxy, un groupe alcoxy, un groupe amide d'acide sulfonique et un groupe amide d'acide carboxylique ;
ou par la formule générale :

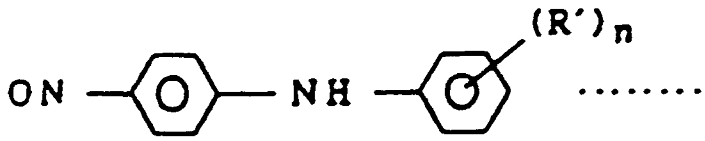

(II)

dans laquelle n est un entier de 1 à 3 et les R' qui sont identiques ou différents, sont choisis dans le groupe constitué par un groupe trifluoroalkyle, un atome d'halogène et un groupe nitro, pour stabiliser un colorant organique contre l'action de la lumière.

2. Utilisation selon la revendication 1, où la nitrosodiphénylamine est un composé choisi dans le groupe constitué par :
4-nitrosodiphénylamine
4-nitroso-2'-méthyldiphénylamine
4-nitroso-3'-méthyldiphénylamine
4-nitroso-4'-méthyldiphénylamine
4-nitroso-4'-méthoxydiphénylamine
4-nitroso-4'-éthoxydiphénylamine
4-nitroso-4'-aminodiphénylamine
4-nitroso-4'-diméthylaminodiphénylamine
acide 4-(p-nitrosophénylamino)benzoïque
4-nitroso-4'-nitrodiphénylamine
4-nitroso-4'-cyanodiphénylamine
4-fluoro-4'-nitrosodiphénylamine
2-chloro-4'-nitrosodiphénylamine
3-chloro-4'-nitrosodiphénylamine
2-bromo-4'-nitrosodiphénylamine
4-bromo-4'-nitrosodiphénylamine
4-iodo-4'-nitrosodiphénylamine
2-trifluorométhyl-4'-nitrosodiphénylamine
3-trifluorométhyl-4'-nitrosodiphénylamine
4-trifluorométhyl-4'-nitrosodiphénylamine
4-éthyl-4'-nitrosodiphénylamine
4-isopropyl-4'-nitrosodiphénylamine
4-n-butyl-4'-nitrosodiphénylamine
2,4-dichloro-4'-nitrosodiphénylamine
3,4-dichloro-4'-nitrosodiphénylamine
2,4-dibromo-4'-nitrosodiphénylamine
3,5-bis(trifluorométhyl)-4'-nitrosodiphénylamine
3-chloro-4-méthyl-4'-nitrosodiphénylamine
2-méthyl-5-nitro-4'-nitrosodiphénylamine

2-chloro-4-nitro-4'-nitrosodiphénylamine
2-chloro-5-nitro-4'-nitrosodiphénylamine
3-nitro-4-chloro-4'-nitrosodiphénylamine
2,4,5-trichloro-4'-nitrosodiphénylamine

3. Utilisation selon la revendication 1 ou 2, où le colorant organique est un colorant de type cyanine.

4. Utilisation selon l'une quelconque des revendications 1 à 3, où le colorant est un composant d'un milieu d'enregistrement optique.